# EUROPÄISCHE PATENTSCHRIFT

(11) **EP 2 556 292 B1**
(45) Veröffentlichungstag und Bekanntmachung des Hinweises auf die Patenterteilung: **18.07.2018**
(21) Anmeldenummer: 11714229.9
(22) Anmeldetag: 08.04.2011
(51) Int. Cl.: F21V 5/04, F21K 99/00, F21V 5/00, G02B 3/08, G02B 27/00, H01L 25/075, H01L 33/58

(54) **LEUCHTE MIT OPTISCHER PLATTE**
LUMINAIRE WITH OPTICAL PLATE
SYSTÈME D'ÉCLAIRAGE À PLAQUE OPTIQUE

(30) Priorität: 08.04.2010 DE 102010014209
(43) Veröffentlichungstag der Anmeldung: 13.02.2013
(73) Patentinhaber: Siteco Beleuchtungstechnik GmbH, 83301 Traunreut (DE)
(72) Erfinder: LEWERS, Christoph, 59821 Arnsberg (DE)
(74) Vertreter: Schohe, Stefan
(86) Internationale Anmeldenummer: PCT/EP2011/001774
(87) Internationale Veröffentlichungsnummer: WO 2011/124393

(56) Entgegenhaltungen:
- WO-A1-2008/152561
- WO-A1-2009/056000
- WO-A1-2009/087587
- DE-A1- 10 034 886
- DE-A1- 10 142 582
- DE-A1- 10 214 566
- DE-A1- 10 333 907
- DE-A1-102005 011 110
- DE-A1-102006 013 343
- US-A1- 2002 024 822
- US-A1- 2003 053 310
- US-A1- 2006 044 806
- US-A1- 2006 139 953
- US-A1- 2008 273 324
- US-A1- 2010 061 090

## Beschreibung

Die Erfindung betrifft allgemein eine Leuchte und insbesondere eine Leuchte mit einer strukturierten optischen Platte zur Lichtlenkung sowie eine entsprechende optische Platte. Insbesondere betrifft die Erfindung Innenleuchten, wie beispielsweise Büroleuchten und Arbeitsplatzleuchten, die als Einbauleuchten, Anbauleuchten, Pendelleuchten oder Stehleuchten ausgeführt sein können.

Leuchten mit herkömmlichen Lichtquellen, wie beispielsweise Leuchtstofflampen, erfordern zur Entblendung die Anordnung von Spiegelrastern, Lampenreflektoren, Lamellen oder Prismenplatten, die von der Lichtquelle ausgehende störende Strahlung gegenüber dem normalen Blickfeld der sich in der Umgebung befindenden Personen abschirmen. Derartige zur Außenseite der Leuchte gerichtete Prismenplatten sind beispielsweise in der EP 1 130 310 beschrieben.

Allerdings erfordern die Prismenplatten einen beträchtlichen Aufwand bei der Herstellung. Darüber hinaus ist häufig eine zusätzliche plane, leicht zur reinigende Abdeckplatte über der nach außen gerichteten Prismenplatte erforderlich, um das Leuchtengehäuse zu verschließen und eine Verschmutzung der Prismenplatte zu vermeiden.

US 2010/0061090 offenbart ein Beleuchtungssystem mit einem Array aus Lichtquellen, die in einer ersten Ebene angeordnet sind, und einem Array zugeordneter Linsen, die in einer zweiten Ebene angeordnet sind, wobei die zweite Ebene im Wesentlichen parallel zur ersten Ebene orientiert ist. Darüber hinaus wird ein Mittel zur Verschiebung des Arrays von Linsen relativ zum Array aus Lichtquellen parallel zur ersten Ebene offenbart. Offenbart wird ferner die Verwendung von LEDs sowie von Fresnel-Linsen.

DE 10 2005 011 110 A1 offenbart eine Linse mit einem transparenten Element, das eine plattenähnliche Form mit zwei Oberflächen aufweist, wobei sowohl auf der ersten als auch auf der zweiten Oberfläche des transparenten Elements eine Fresnel-Linsenoberfläche vorgesehen ist. Als Lichtquelle dienen eine oder mehrere LEDs, die dem transparenten Element gegenüberliegend angeordnet sind. Darüber hinaus wird ein Linsen-Array offenbart, das eine Mehrzahl von Fresnel-Linsenoberflächen aufweist, die so angeordnet sind, dass je eine Fresnel-Linsenoberfläche je einer der LEDs gegenüberliegt.

US 2002/0024822 A1 offenbart eine Leuchtenanordnung mit einer aus einer Kombination verschiedener optischer Elemente einschließlich von Fresnel-Ringen zusammengesetzten Linse. Die Leuchtenanordung ist in erster Linie zum Einsatz bei Fahrzeugen vorgesehen. Als Leuchtmittel sind eine oder mehrere LEDs vorgesehen.

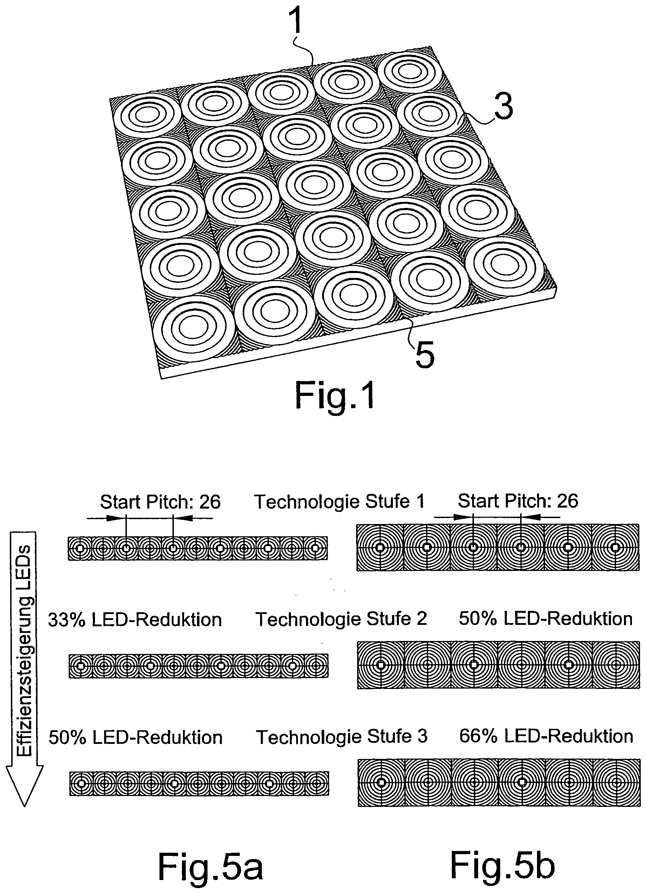

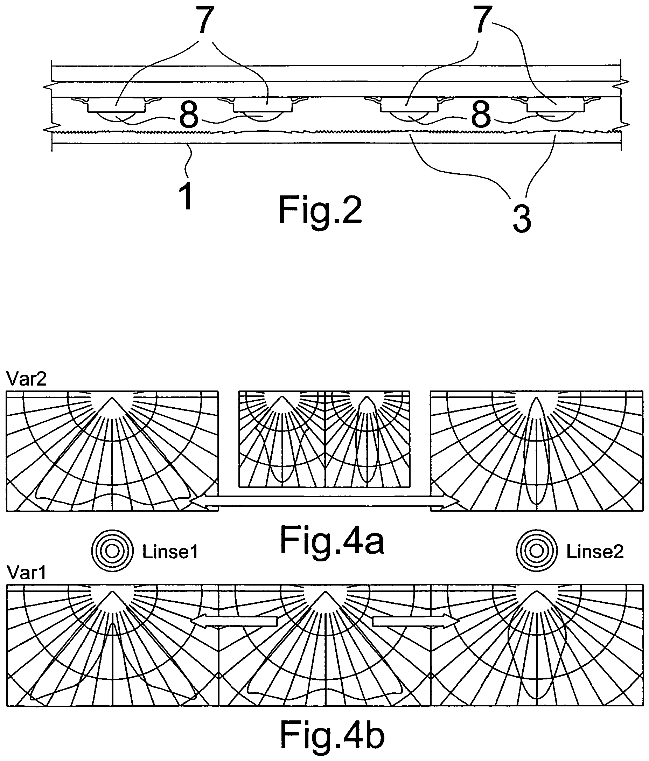

WO 2008/152561 A1 offenbart eine Leuchte, die eine Vielzahl von Lichtquellen 10 und optischen Elementen 20 aufweist, die in einer optischen Beziehung zu einander stehen (siehe Fig. 1). Die Lichtquellen sind in einem ersten Array 11 und einem zweiten Array 12 angeordnet. Die optischen Elemente sind in verschiedenen Sektionen angeordnet. Die optischen Elemente in den verschiedenen Gruppen weisen unterschiedliche Lichtlenkungseigenschaften auf. US 2006/0139953 A1 offenbart ein Flüssigkristalldisplay sowie ein dafür bestimmtes Hintergrundlichtmodul. Das Hintergrundlichtmodul umfasst ein Substrat mit optischem Film und einer Mehrzahl von Lichtquellen, wobei eine Oberfläche des Substrats mit optischem Film eine Vielzahl von Fresnel-Bereichen aufweist. Wie in Fig. 2a gezeigt ist, sind als Lichtquellen mehrere LEDs vorgesehen, die jeweiligen Fresnel-Bereichen des Substrats mit optischem Film zugeordnet sind. Es ist die Aufgabe der vorliegenden Erfindung, eine Entblendungseinrichtung für eine Leuchte sowie eine Leuchte mit einer solchen Entblendungseinrichtung bereitzustellen.

Diese Aufgabe wird gelöst mit einer optischen Platte mit den Merkmalen gemäß dem Hauptanspruch 1. Bevorzugte Ausführungsformen sind in den Unteransprüchen angegeben.

Eine Leuchte umfasst als Lichtquelle mehrere Punktlichtquellen, wie beispielsweise LEDs oder OLEDs mit einer ausreichend kleinen Ausdehnung, so dass sie als Punktlichtquelle verwendet werden können. Darüber hinaus umfasst die Leuchte die erfindungsgemäße optische Platte zur Lichtlenkung, die mehrere optische Linsen aufweist. Die optische Platte ist gegenüberliegend zu den LEDs angeordnet, so dass sie von den LEDs durchstrahlt wird, und jeder LED ist eine der optischen Linsen zugeordnet. Durch die Verwendung von Punktlichtquellen in Kombination mit einer optische Linsen umfassenden optischen Platte, kann eine kostengünstig herzustellende und gut entblendete Leuchte bereitgestellt werden,
wobei auf Spiegelraster, Lamellen oder zur Außenseite der Leuchte gerichtete Prismenplatten verzichtet werden kann.

Dies wird dadurch erreicht, dass im Wesentlichen die gesamte von den LEDs ausgehende Strahlung in den zugeordneten optischen Linsen gesammelt und in die gewünschte Abstrahlrichtung der Leuchte gelenkt werden. Seitlich in das Blickfeld von Personen gerichtetes störendes Licht sowie Reflexionen auf Bildschirmen können vermieden werden.

Darüber hinaus kann die Position und der Abstand der optischen Linsen auf der optischen Platte im Verhältnis zu den LEDs so gewählt werden, dass eine bestimmte Lichtstärkeverteilungskurve des aus den optischen Linsen und aus der Leuchte insgesamt austretenden Lichtes erreicht wird.

Als weiteren Vorteil hat die Leuchte aufgrund der Verwendung von LEDs eine höhere Lebensdauer als eine Leuchte, in der herkömmliche Leuchtstofflampen verwendet werden.

Gemäß einer bevorzugten Ausführungsform sind die optischen Linsen Fresnel-Linsen. Fresnel-Linsen können direkt in der Oberfläche der optischen Platte ausgebildet werden und sind einfacher herzustellen als herkömmliche Brechungslinsen. Darüber hinaus ermöglichen die Fresnel-Linsen eine sehr geringe Höhe der Linsenstruktur auf der optischen Platte. Die Fresnel-Linsen umfassen ringförmige Licht brechende Bereiche, die der Licht brechenden Oberfläche einer normalen Linse mit jeder beliebigen Form, wie beispielsweise einer Sammellinse, Zerstreuungslinse oder Freiformlinse entsprechen. Wie normale optische Linsen können auch Fresnel-Linsen eine Brennweite aufweisen.

Gemäß einer weiteren bevorzugten Ausführungsform sind die optischen Linsen auf der den LEDs zugewandten Seite der optischen Platte ausgebildet. Die optische Platte kann, insbesondere wenn ihre nach Außen gerichtete Seite plan ist und keine Strukturierung aufweist, gleichzeitig als Abschlussplatte der Leuchte dienen, die einfach zu reinigen ist. Auf eine separate Abschlussplatte kann verzichtet werden.

Gemäß einer anderen Ausführungsform sind die LEDs zentral über den zugeordneten Linsen angeordnet, um möglichst die gesamte von der jeweiligen LED abgegebene Strahlung in der optischen Linse zu sammeln und seitliches Streulicht weitgehend zu vermeiden. Die verwendeten LEDs können mit einer darin integrierten oder den LEDs zugeordneten Optik oder mit Reflektoren versehen sein, um das davon ausgehende Licht möglicht vollständig auf die optische Linsen zu richten.

Gemäß der Erfindung sind zwischen den optischen Linsen lichtstreuende Strukturen aus einem transparenten Material angeordnet. Durch die zwischen den optischen Linsen angeordneten Bereiche können beispielsweise Streulichtanteile zusätzlich in eine gewünschte Abstrahlrichtung der Leuchte gelenkt werden, um eine spezielle Abstrahlungscharakteristik der Leuchte zu erzeugen.

Gemäß einer weiteren bevorzugten Ausführungsform sind die optischen Linsen in einem regelmäßigen Muster oder rasterartig in Reihen und Spalten auf der optischen Platte angeordnet. Dadurch dass die den optischen Linsen zugeordneten LEDs entsprechend der räumlichen rasterförmigen Anordnung der optischen Linsen Abstände zwischen sich aufweisen, kann auch die in den LEDs erzeugte Wärme besser aus der Leuchte abgeführt werden, als wenn die LEDs sehr eng nebeneinander angeordnet wären.

Gemäß einer weiteren Ausführungsform weisen die optischen Linsen eine symmetrische, runde, elliptische, ovale, rechteckige, viereckige, quadratische, sechseckige, polygonale oder asymmetrische Form auf. Dadurch lassen sich bestimmte Abstrahlcharakteristiken der Linsen und der Leuchte insgesamt sowie entsprechende Lichtstärkeverteilungskurven erreichen. Insbesondere spiegeln sich in den von den optischen Linsen ausgehenden Lichtstärkeverteilungskurven die Formen der optischen Linsen wieder. Es können so beispielsweise rotationssymmetrische Lichtverteilungen mit entsprechenden rotationssymmetrisch ausgebildeten optischen Linsen erreicht werden.

Gemäß einer anderen bevorzugten Ausführungsform ist jeweils eine optische Linse auf einem Flächenelement angeordnet, wobei das Flächenelement eine symmetrische, runde, elliptische, ovale, rechteckige, viereckige, quadratische, sechseckige, polygonale oder asymmetrische Form aufweist. Die einzelnen mit optischen Linsen versehenen Flächenelemente können zu einer Gesamtfläche auf der optischen Platte kombiniert werden. Andererseits können zwischen den einzelnen Flächenelementen auch Flächenelemente angeordnet sein, die keine optischen Linsen umfassen. Zwischen den Flächenelementen können auch lichtundurchlässige Trennschichten vorgesehen sein.

Gemäß einer weiteren Ausführungsform umfasst zumindest ein Teil der Oberfläche der optischen Platte mehrere Flächenelemente, die in einem quadratischen oder hexagonalen Muster angeordnet sind. Es können alle Flächenelemente optische Linsen aufweisen oder es können auch Flächenelemente vorgesehen werden, auf welchen keine optischen Linsen ausgebildet sind. Mit den Flächenelementen kann eine vollständige Abdeckung der Oberfläche der optischen Platte oder eines Teils derselben erreicht werden.

Gemäß der Erfindung umfassen die optischen Linsen Gruppen von optischen Linsen mit unterschiedlicher Lichtlenkungseigenschaft. Beispielsweise können auf einer optischen Platte zwei Gruppen von optischen Linsen vorgesehen werden, die jeweils eine andere Lichtlenkungseigenschaft aufweisen. Es ist denkbar, Linsen mit einer bestimmten Lichtlenkungseigenschaft jeweils einer Gruppe von LEDs zuzuordnen, die gemeinsam angesteuert werden können. Durch das separate Ansteuern einzelner Gruppen von LEDs, die jeweils Gruppen von optischen Linsen auf der optischen Platte mit unterschiedlichen Lichtlenkungseigenschaften zugeordnet sind, kann zwischen mehreren Lichtstärkeverteilungskurven der Leuchte umgeschaltet werden. Die Anordnung der Linsen mehrerer Gruppen kann so sein, dass Linsen einer Gruppe zwischen den Linsen einer anderen Gruppe angeordnet sind, oder auch so, dass die Linsen einer oder mehrerer Gruppen in einem jeweils ausschließlich der Gruppe zugeordneten Abschnitt der optischen Platte angeordnet sind, wobei sich die Abschnitte zumindest einiger Gruppen nicht überlagern und gegebenenfalls nebeneinander angeordnet sind.

Darüber hinaus ist es denkbar lediglich eine Gruppe von LEDs in der Leuchte vorzusehen, die einer Gruppe von optischen Linsen mit einer bestimmten Lichtlenkungseigenschaft zugeordnet und in der Leuchte entsprechend angeordnet wird, während optischen Linsen mit einer anderen Lichtlenkungseigenschaft keine LEDs zugeordnet werden. Damit können mit derselben optischen Platte und demselben LED-Array durch Verändern der Position des LED-Arrays im Verhältnis zur optischen Platte zwei unterschiedliche Leuchten mit unterschiedlichen Lichtstärkeverteilungskurven hergestellt werden.

Gemäß einer weiteren bevorzugten Ausführungsform ist die Zahl der LEDs geringer als die Zahl der optischen Linsen. Beispielsweise könnte nur jeder zweiten, dritten, vierten, fünften oder zehnten optischen Linse eine LED zugeordnet sein. Durch Variation der Anzahl der verwendeten LEDs wird es möglich Leuchten mit unterschiedlicher Lichtstärke bereitzustellen. Andererseits können mit LEDs unterschiedlicher Lichtstärke, Leuchten mit im wesentlichen derselben Lichtstärke, jedoch unterschiedlicher Zahl von LEDs bereitgestellt werden.

In der Leuchte können die LEDs in einem LED-Array angeordnet sein, wobei das LED-Array vorzugsweise so im Verhältnis zur optischen Platte angeordnet wird, dass sich die LEDs zentral über den zugeordneten Linsen befinden. Zur Realisierung unterschiedlicher Lichtverteilungen ist es jedoch auch denkbar, das LED-Array im Verhältnis zur optischen Platte unterschiedlich zu positionieren. Es ist beispielsweise denkbar, auch den Abstand zwischen dem LED-Array und der optischen Platte zu variieren, so dass sich die LEDs näher an oder entfernter von den optischen Linsen befinden. Darüber hinaus könnte das LED-Array auch in horizontaler Richtung bezüglich der Oberfläche der optischen Platte versetzt werden. Es ist beispielsweise denkbar, LEDs nicht zentral über den jeweils zugeordneten optischen Linsen zu positionieren, sondern beispielsweise zwischen zwei benachbarten optischen Linsen. Schließlich ist es denkbar, die optischen Linsen auf einer Seite einer Folie auszubilden, die dann auf einem transparenten Träger, wie beispielsweise einer Platte durch Kleben aufgebracht wird. Der Träger kann eine beliebige Form aufweisen und beispielsweise eine gebogene Platte sein. Des Weiteren können anstelle von LEDs andere Punktlichtquellen, wie beispielsweise OLEDs mit ausreichend kleiner Ausdehnung verwendet werden.

Die optische Platte oder die Folie können so ausgebildet sein, dass sie in ein anderes Bauteil der Leuchte, wie beispielsweise eine Wanne, eingelegt oder daran befestigt werden können. Es ist auch denkbar, dass die optische Platte als Struktur auf ein geformtes Bauteil, wie beispielsweise eine Wanne, aufgebracht oder darin eingeformt ist.

Erfindungsgemäß wird des Weiteren eine optische Platte zur Verwendung in einer Leuchte, wie sie oben beschrieben wurde, bereitgestellt. Die optische Platte umfasst mehrere in einer Fläche angeordnete optische Linsen, wobei jede der optischen Linsen eingerichtet ist, Licht von einer der optischen Linse zugeordneten Punktlichtquelle zu lenken. Vorzugsweise hat die optische Platte die Form einer ebenen Platte. Alternative könnte die optische Platte jedoch auch in einer oder mehreren Richtungen gekrümmt sein.

Gemäß einer bevorzugten Ausführungsform sind die optischen Linsen auf der optischen Platte Fresnel-Linsen, die in der Oberfläche der optischen Platte ausgebildet sind.

Gemäß einer weiteren Ausführungsform umfassen die optischen Linsen Fresenel-Linsen mit zwei oder mehr unterschiedlichen Lichtlenkungseigenschaften.

Die optischen Linsen umfassen Gruppen von optischen Linsen mit unterschiedlicher Abbildungs- oder Lichtlenkungseigenschaft. Beispielsweise können auf einer optischen Platte zwei Gruppen von optischen Linsen vorgesehen werden, die jeweils eine andere Lichtlenkungseigenschaft aufweisen. Die Anordnung der Linsen mehrerer Gruppen kann so sein, dass Linsen einer Gruppe zwischen den Linsen einer anderen Gruppe angeordnet sind, oder auch so, dass die Linsen einer oder mehrerer Gruppen in einem jeweils ausschließlich der Gruppe zugeordneten Abschnitt der optischen Platte angeordnet sind, wobei sich die Abschnitte von zumindest zwei Gruppen nicht überlagern und gegebenenfalls nebeneinander angeordnet sind.

Zwischen den optischen Linsen sind lichtstreuende Strukturen aus einem transparenten Material angeordnet.

Gemäß einer weiteren Ausführungsform sind die optischen Linsen auf einer oder auf beiden Seiten der optischen Platte angeordnet. Vorzugsweise sind die Linsen auf der den LEDs zugewandten Seite der optischen Platte angeordnet.

Gemäß einer weiteren Ausführungsform sind die optischen Linsen mit einer symmetrischen, runden, elliptischen, ovalen, rechteckigen, viereckigen, quadratischen, sechseckigen, polygonalen oder asymmetrischen Form ausgebildet.

Darüber hinaus können die optischen Linsen auf Flächenelementen angeordnet sein, die eine symmetrische, runde, elliptische, ovale, viereckige, quadratische, sechseckige, polygonale oder asymmetrische Form aufweisen.

Gemäß einer weiteren Ausführungsform sind die Flächenelemente in der Form eines Schachbrettmusters oder Wabenmusters auf der Oberfläche der Platte angeordnet.

Die optische Platte ist vorzugsweise aus einem transparentem Material, wie beispielsweise Glas oder Kunststoff ausgebildet. Bei der optischen Platte kann es sich auch um eine Folie handeln, auf deren Oberfläche die optischen Linsen ausgebildet sind. Die Folie kann beispielsweise auf einem transparenten Träger angeordnet, insbesondere aufgeklebt werden.

Zusätzlich kann die optische Platte auf einer Seite oder auf beiden Seiten eine antireflektierende Beschichtung aufweisen oder antireflektierend behandelt sein.

Weitere Merkmale, Eigenschaften und Vorteile der Erfindung ergeben sich aus der nachfolgenden Beschreibung einer beispielhaften Ausführungsform der Erfindung in Kombination mit den beigefügten Zeichnungen, in welchen:
- Fig. 1: eine optische Platte gemäß einer Ausführungsform der Erfindung in einer perspektivischen Ansicht von oben zeigt;
- Fig. 2: eine erfindungsgemäße Leuchte gemäß einer Ausführungsform in Schnittansicht zeigt;
- Fig. 3a-3f: Oberflächenstrukturen der optischen Platte gemäß Ausführungsformen zeigen;
- Fig. 4a, 4b: Lichtstärkeverteilungskurven einer Leuchte gemäß einer Ausführungsform zeigen, wobei das LED-Array der Leuchte in zwei unterschiedlichen Positionen bezüglich der optischen Platte angeordnet ist; und
- Fig. 5a, 5b: schematisch Beispiele von Leuchten gemäß Ausführungsformen mit unterschiedlichen Zahlen von LEDs zeigen.

Die vorliegende Erfindung wird im Folgenden anhand beispielhafter Ausführungsformen unter Bezugnahme auf die Figuren beschrieben. Die in Fig. 1 gezeigte optische Platte 1 einer Leuchte umfasst auf ihrer Oberfläche eine Struktur von in Reihen und Spalten rasterförmig angeordneten Fresnel-Linsen 3. Die rund ausgebildeten Fresnel-Linsen 3 sind auf quadratischen Flächenelementen 5 positioniert oder ausgebildet, die in einem Schachbrettmuster angeordnet sind. Die Fresnel-Linsen 3 können unmittelbar auf oder in der Oberfläche der optischen Platte 1 ausgebildet werden. Die optische Platte 1 ist aus einem transparenten Material, wie beispielsweise einem transparenten Kunststoff, hergestellt. Alternativ könnten die Fresnel-Linsen 3 jedoch auch auf einer transparenten Folie ausgebildet sein, die auf eine transparente Platte aufgebracht oder aufgeklebt wird.

Die in Fig. 2 gezeigte Leuchte umfasst mehrere in einem LED-Array angeordnete LEDs 7, die gegenüberliegend zu einer optischen Platte 1 in einem Abstand von 10mm angeordnet sind. Der angegebene Abstand ist jedoch nur beispielhaft und kann auch anders gewählt werden. Die einzelnen LEDs sind mit einer Lichtlenkenden Optik 8 versehen, die unmittelbar an den LEDs angebracht ist. Die optische Platte 1 umfasst abwechselnd angeordnete Fresnel-Linsen 3 mit zwei unterschiedlichen Lichtlenkungseigenschaften. Die unterschiedlichen Lichtlenkungseigenschaften ergeben sich insbesondere aus den unterschiedlichen Abständen der Licht brechenden Ringe oder Licht brechenden Flächen der Fresnel-Linsen, wie in Fig. 2 zu erkennen ist. Die Lichtlenkende Optik 8 der LEDs dient dazu, das von den LEDs ausgesandte Licht auf die Fresnel-Linsen 3 zu richten.

In Fig. 2 grenzen die Strukturen der Beugungsflächen der benachbarten Fresnel-Linsen unmittelbar aneinander. Es können sich zwischen den Fresnel-Linsen 3 jedoch auch Übergangsbereiche befinden, in welchen ein allmählicher Übergang von der Struktur oder Orientierung der Licht brechenden Flächen einer Fresnel-Linse 3 zu der einer benachbarten Fresnel-Linse 3 stattfindet. Darüber hinaus können sich zwischen den Fresnel-Linsen 3 auch anders strukturierte Bereiche mit einer gezahnten oder gerippten Oberfläche befinden, die ebenfalls eine Lichtlenkende Funktion haben und Streulicht in eine gewünschte Abstrahlrichtung der Leuchte lenken können.

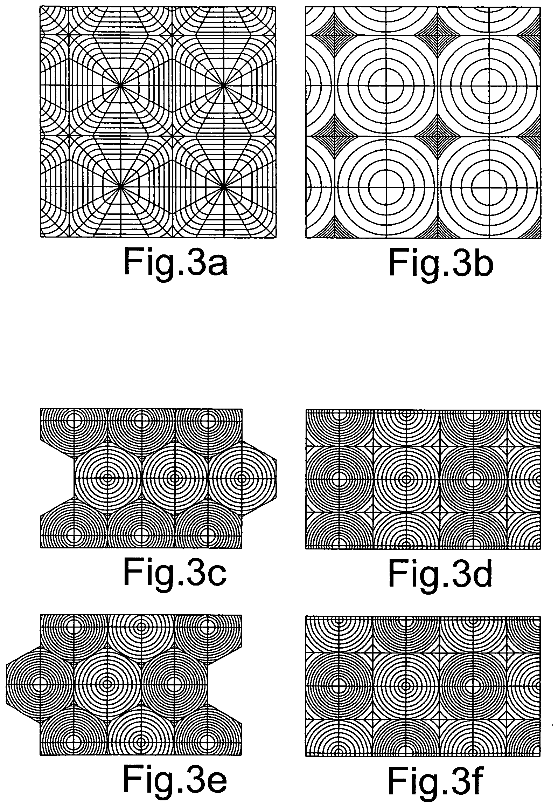

Ausführungsformen von Oberflächen optischer Platten 1 mit optischen Linsen mit unterschiedlichen Lichtlenkungseigenschaften sind in den Fig. 3c bis 3f gezeigt. Im Gegensatz dazu haben die in den Fig. 3a und 3b gezeigten optischen Platten 1 lediglich optische Linsen 3 mit einer einzigen Lichtlenkungseigenschaft. Wie weiter in Fig. 3a zu erkennen ist, können die Strukturen der Fresnel-Linsen 3 eine im Wesentlichen rechteckige Form mit abgerundeten Ecken aufweisen und auf quadratischen Flächenelementen 5 angeordnet sein. Wie in Fig. 3b zu erkennen ist, können die Strukturen der Fresnel-Linsen 3 jedoch auch als kreisförmige, auf quadratischen Flächenelementen 5 angeordnete Linsen ausgeführt sein, wobei sich benachbarte Linsen berühren. Die unterschiedlichen Formen der optischen Linsen resultieren in entsprechenden Lichtstärkeverteilungskurven.

Wie in Fig. 3c zu erkennen ist, können die Fresnel-Linsen 3 auch eine kreisrunde Form aufweisen und auf hexagonalen Flächenelementen 5 angeordnet sein. Die hexagonalen Flächenelemente 5 können wiederum in einem Wabenmuster angeordnet sein, wobei zwischen Reihen von Fresnel-Linsen 3 mit einer bestimmten Lichtlenkungseigenschaft Reihen von Fresnel-Linsen mit einer anderen Lichtlenkungseigenschaft angeordnet sind. Gemäß der in Fig. 3e gezeigten Ausführungsform wechseln sich die Fresnel-Linsen mit unterschiedlichen Lichtlenkungseigenschaften innerhalb einer Reihe ab. In den Figuren 3d und 3f sind kreisförmig ausgebildete Fresnel-Linsen 3 auf quadratischen Flächenelementen 5 angeordnet, wobei gemäß der Darstellung in Fig. 3d die Fresnel-Linsen 3 mit unterschiedlichen Lichtlenkungseigenschaften jeweils in getrennten Reihen angeordnet sind oder in der Form eines Schachbrettmusters, wie in Fig. 3f gezeigt ist. Die gezeigten Formen von Mustern und Anordnung können auch auf andere Weise kombiniert werden, wodurch sich weitere nicht gezeigte Ausführungsformen ergeben.

Fig. 4a und 4b zeigen Lichtstärkeverteilungskurven einer Leuchte mit einer optischen Platte 1, die optische Linsen 3 mit zwei unterschiedlichen Lichtlenkungseigenschaften umfasst. Die in der Fig. 4a links gezeigte Lichtstärkeverteilungskurve ergibt sich durch die Überlagerung des Lichtes, das von beiden Arten von optischen Linsen 3 mit unterschiedlichen Lichtlenkungseigenschaften stammt. Die in Fig. 4 rechts gezeigte Lichtstärkeverteilungskurve wurde durch Verschieben der LEDs im Verhältnis zur optischen Platte 1 erzeugt, so dass sich die LEDs im Verhältnis zur links gezeigten Lichtstärkeverteilungskurve über anderen optischen Linsen 3 mit einer anderen Lichtlenkungseigenschaft befanden.

Bei der Ausführungsform gemäß der Darstellung in Fig. 4b wurde die Positionen des LED-Arrays in horizontaler Richtung versetzt, so dass sich die LEDs bei den links und rechts gezeigten Lichtstärkeverteilungskurven lediglich über den optischen Linsen 3 mit einer Lichtlenkungseigenschaft befanden, während die mittlere Lichtstärkeverteilungskurve aus der Überlagerung von Licht resultiert, das von beiden Typen von optischen Linsen 3 stammt. Derselbe Effekt lässt sich erzielen, indem beiden Typen von optischen Linsen 3 zugeordnete Gruppen von LED-Arrays jeweils an- oder ausgeschaltet oder mit erhöhter oder verminderter Leistung angesteuert werden.

Entsprechend den links und rechts gezeigten Lichtstärkeverteilungskurven können mit denselben Baugruppen, d.h. einem LED Array und einer optischen Platte Leuchten mit unterschiedlicher Abstrahlcharakteristik, entsprechend der mit den LEDs verwendeten optischen Linsen und deren Lichtlenkungseigenschaften hergestellt werden.

Somit ist es möglich, mit einem LED-Array und einer optischen Platte in Abhängigkeit von der Position des LED-Arrays im Verhältnis zur optischen Platte unterschiedliche Lichtstärkeverteilungskurven und damit Leuchten mit unterschiedlichen Abstrahlungscharakteristiken zu erzeugen, wobei im wesentlichen dieselben Komponenten und Bauteile verwendet werden.

Fig. 5a und 5b zeigen Abschnitte von optischen Platten 1 von Leuchten derselben Bauart, die jedoch mit unterschiedlichen Zahlen von LEDs bestückt wurden. Während in Fig. 5a in der oben gezeigten Abbildung lediglich jeder zweiten Fresnel-Linse eine LED zugeordnet ist, wurde gemäß der mittleren Abbildung von Fig. 5a jeder dritten und gemäß der unteren Abbildung in Fig. 5a lediglich jeder vierten optischen Linse eine LED zugeordnet. Dadurch kann die Anzahl der LEDs um 33% bzw. 50% reduziert werden. Hinsichtlich der Gesamtlichtstärke der Leuchte kann die Reduzierung der Zahl der LEDs durch die Verwendung von LEDs mit höherer Lichtstärke kompensiert werden. Somit können Leuchten gleicher Bauart mit gleicher Lichtstärke bei durch den technischen Fortschritt zunehmender Lichtstärke der LEDs im zeitlichen Verlauf mit immer weniger LEDs realisiert werden, ohne die optische Platte verändern zu müssen.

Fig. 5b zeigt ein weiteres Beispiel einer Leuchte, bei der zunächst jeder Fresnel-Linse eine LED zugeordnet wurde, wie in der oberen Abbildung von Fig. 5b zu erkennen ist, während gemäß der mittleren und unteren Abbildung von Fig. 5b lediglich jeder zweiten optischen Linse beziehungsweise jeder dritten optischen Linse eine LED zugeordnet wurde. Dadurch erfolgt eine Reduktion der Anzahl der LEDs um 50% bzw. um 66%, die durch einen Anstieg der Leuchtstärke der einzelnen LEDs infolge des technischen Fortschritts kompensiert werden könnte.

An den Ausführungsbeispielen können zahlreiche Modifizierungen vorgenommen werden, ohne den Umfang der Erfindung zu verlassen.

## Patentansprüche

1. Optische Platte (1) zur Verwendung in einer Leuchte mit mehreren Punktlichtquellen, wobei die optische Platte (1) mehrere in einer Fläche angeordnete optische Linsen (3) umfasst, wobei jede der optischen Linsen (3) eingerichtet ist, Licht von einer der optischen Linse zugeordneten Punktlichtquelle zu lenken, wobei die optischen Linsen (3) Gruppen von Linsen mit unterschiedlichen Lichtlenkungseigenschaften aufweisen, **dadurch gekennzeichnet, dass** zwischen den optischen Linsen (3) Licht streuende Strukturen aus einem transparenten Material angeordnet sind.

2. Optische Platte (1) nach Anspruch 1, **dadurch gekennzeichnet, dass** die optischen Linsen (3) Fresnel-Linsen sind, die in der Oberfläche der optischen Platte (1) ausgebildet sind.

3. Optische Platte (1) nach Anspruch 1 oder 2, **dadurch gekennzeichnet, dass** die optischen Linsen (3) eine symmetrische, runde, elliptische, ovale, viereckige, rechteckige, quadratische, sechseckige, polygonale oder asymmetrische Form aufweisen.

4. Optische Platte (1) nach einem der Ansprüche 1 bis 3, **dadurch gekennzeichnet, dass** eine optische Linse (3) auf einem Flächenelement (5) mit einer symmetrischen, runden, elliptischen, ovalen, viereckigen, rechteckigen, quadratischen, sechseckigen, polygonalen oder asymmetrischen Form angeordnet ist.

5. Leuchte, welche mehrere Punktlichtquellen (7) als Lichtquelle und eine optische Platte (1) gemäß einem der Ansprüche 1 bis 4 zur Lichtlenkung aufweist, **dadurch gekennzeichnet, dass** die optische Platte (1) gegenüberliegend zu den Punktlichtquellen (7) angeordnet ist und jeder Punktlichtquelle (7) eine der optischen Linsen (3) zugeordnet ist.

6. Leuchte nach Anspruch 5, **dadurch gekennzeichnet, dass** Gruppen von Punktlichtquellen, die jeweils Gruppen von Linsen mit einer Lichtlenkungseigenschaft zugeordnet sind, separat ansteuerbar sind.

7. Leuchte nach Anspruch 5 oder 6, **dadurch gekennzeichnet, dass** die optischen Linsen (3) auf der den Punktlichtquellen (7) zugewandten Seite der optischen Platte (1) ausgebildet sind.

8. Leuchte nach einem der Ansprüche 5 bis 7, **dadurch gekennzeichnet, dass** die Punktlichtquellen (7) zentral über den zugeordneten optischen Linsen (3) angeordnet sind.

9. Leuchte nach einem der Ansprüche 5 bis 8, **dadurch gekennzeichnet, dass** die optischen Linsen (3) in einem regelmäßigen Muster in Reihen und Spalten auf der optischen Platte (1) angeordnet sind.

10. Leuchte nach einem der Ansprüche 5 bis 9, **dadurch gekennzeichnet, dass** zumindest ein Teil der Oberfläche der optischen Platte (1) mehrere Flächenelemente (5) umfasst, die in einem quadratischen oder hexagonalen Muster angeordnet sind.

11. Leuchte nach einem der Ansprüche 5 bis 10, **dadurch gekennzeichnet, dass** die Zahl der Punktlichtquellen (7) geringer ist als die Zahl der optischen Linsen (3).

## Claims

1. Optical plate (1) for use in a luminaire with multiple point light sources, wherein the optical plate (1) comprises multiple optical lenses (3) arranged in a surface, wherein each of the optical lenses (3) is configured such as to direct light from a point light source assigned to the optical lens, wherein the optical lenses (3) comprise groups of lenses with different light directing properties, **characterized in that** light scattering structures made of a transparent material are arranged between the optical lenses (3).

2. Optical plate (1) according to claim 1, **characterized in that** the optical lenses (3) are Fresnel lenses, which are formed in the surface of the optical plate (1).

3. Optical plate (1) according to claim 1 or 2, **characterized in that** the optical lenses (3) exhibit a symmetrical, round, elliptical, overall, quadrilateral, rectangular, quadratic, hexagonal, polygonal, or asymmetrical form.

4. Optical plate (1) according to any one of claims 1 to 3, **characterized in that** an optical lens (3) is arranged on a surface element (5), with a symmetrical, round, elliptical, overall, quadrilateral, rectangular, quadratic, hexagonal, polygonal, or asymmetrical form.

5. Luminaire, which comprises multiple point light sources (7) as light source and an optical plate (1) in accordance with any one of claims 1 to 4 for directing light, **characterized in that** the optical plate (1) is arranged opposite the point light sources (7), and that one of the optical lenses (3) is assigned to each point light source (7).

6. Luminaire according to claim 5, **characterized in that** groups of point light sources, which in each case are assigned to groups of lenses with a light directing property, can be actuated separately.

7. Luminaire according to claim 5 or 6, **characterized in that** the optical lenses (3) are formed on the side of the optical plate (1) which faces towards the point light sources (7).

8. Luminaire according to any of claims 5 to 7, **characterized in that** the point light sources (7) are arranged centrally above the optical lenses (3) assigned to them.

9. Luminaire according to any of claims 5 to 8, **characterized in that** the optical lenses (3) are arranged in a regular pattern in rows and columns on the optical plate (1).

10. Luminaire according to any of claims 5 to 9, **characterized in that** at least a part of the surface of the optical plate (1) comprises multiple surface elements (5), which are arranged in a quadratic or square or hexagonal pattern.

11. Luminaire according to any of claims 5 to 10, **characterized in that** the number of the point light sources (7) is less than the number of the optical lenses (3).

## Revendications

1. Plaque optique (1) destinée à être utilisée dans un luminaire avec plusieurs sources de lumière ponctuelles, la plaque optique (1) comprenant plusieurs lentilles optiques (3) disposées sur une surface, chacune des lentilles optiques (3) étant conçue pour dévier la lumière provenant d'une des sources de lumières ponctuelles correspondant à une des lentilles optiques, les lentilles optiques (3) comprenant des groupes de lentilles avec différentes propriétés de déviation de la lumière, **caractérisée en ce que**, entre les lentilles optiques (3) se trouvent des structures diffusant la lumière, constituées d'un matériau transparent.

2. Plaque optique (1) selon la revendication 1, **caractérisée en ce que** les lentilles optiques (3) sont des lentilles de Fresnel, qui sont réalisées dans la surface de la plaque optique (1).

3. Plaque optique (1) selon la revendication 1 ou 2, **caractérisée en ce que** les lentilles optiques (3) présentent une forme symétrique, ronde, elliptique, ovale, quadrangulaire, rectangulaire, carrée, hexagonale, polygonale ou asymétrique.

4. Plaque optique (1) selon l'une des revendications 1 à 3, **caractérisée en ce qu'**une lentille optique (3) est disposée sur un élément de surface (5) avec une forme symétrique, ronde, elliptique, ovale, quadrangulaire, rectangulaire, carrée, hexagonale, polygonale ou asymétrique.

5. Luminaire qui comprend plusieurs sources de lumière ponctuelles (7) en tant que source de lumière et une plaque optique (1) selon l'une des revendications 1 à 4 pour la déviation de la lumière, **caractérisé en ce que** la plaque optique (1) est disposée en face des sources de lumière ponctuelles (7) et à chaque source de lumière ponctuelle (7) correspond une des lentilles optiques (3).

6. Luminaire selon la revendication 5, **caractérisée en ce que** des groupes de sources de lumière ponctuelles, qui correspondent chacune à des groupes de lentilles avec une propriété de déviation de lumière, peuvent être contrôlés individuellement.

7. Luminaire selon la revendication 5 ou 6, **caractérisée en ce que** les lentilles optiques (3) sont réalisées sur le côté de la plaque optique (1) orienté vers les sources de lumière ponctuelles (7).

8. Luminaire selon l'une des revendications 5 à 7, **caractérisé en ce que** les sources de lumière ponctuelles (7) sont disposées centralement au-dessus des lentilles optiques (3) correspondantes.

9. Luminaire selon l'une des revendications 5 à 8, **caractérisé en ce que** les lentilles optiques (3) sont disposées dans un motif régulier en lignes et colonnes sur la plaque optique (1).

10. Luminaire selon l'une des revendications 5 à 9, **caractérisé en ce qu'**au moins une partie de la surface de la plaque optique (1) comprend plusieurs éléments de surface (5), qui sont disposés dans un motif carré ou hexagonal.

11. Luminaire selon l'une des revendications 5 à 10, **caractérisé en ce que** le nombre de sources de lumière ponctuelles (7) est inférieur au nombre de lentilles optiques (3).
